# EUROPEAN PATENT APPLICATION

(11) **EP 3 166 169 A1**
(43) Date of publication of application: **10.05.2017**
(21) Application number: 15193307.4
(22) Date of filing: 05.11.2015
(51) Int. Cl.: H01M 10/052, H01M 10/42, H01M 10/44, H02J 7/00

(54) **BATTERY CELL AND BATTERY**

(71) Applicant: Lithium Energy and Power GmbH & Co. KG, 70469 Stuttgart (DE)
(72) Inventor: Masuda, Hideki, Osaka 532-0026 (JP); Mizutani, Shunsuke, Itami-city, 664-0856 Hyogo Prefecture (JP); Kawasoe, Yudai, Kyoto 600-8825 (JP); Katsumata, Yutaro, Kyoto 602-8072 (JP); Wilka, Marcel, Kyoto 602-0802 (JP); Friedrich, Marco, 71638 Ludwigsburg (DE)
(74) Representative: Bee, Joachim

(57) **Abstract**

The present invention concerns a battery cell with improved safety. The battery cell comprises two battery cell terminals which are contactable from outside of the battery cell and an electrochemical part comprising at least one positive electrode and at least one negative electrode, an electrolyte comprising at least one conductive salt and at least one solvent, and at least one separator, wherein the at least one separator becomes at least partially impermeable for ions which can be generated inside of the electrochemical part, when the at least one separator reaches a predefined temperature. Further included is a fast discharge unit having at least one resistor, wherein the fast discharge unit is connectable between the two battery cell terminals and configured to discharge the battery by means of a first current flowing through the battery and the fast discharge unit, wherein a first resistance value of the at least one resistor is selected in such a way, that the first current causes during a through flowing of the battery and the fast discharge unit such a heating of the electrochemical part, that the at least one separator reaches the predefined temperature. The solvent and/or the concentration of the conductive salt are chemically modified to improve the safety of the battery cell.

## Description

### State of the Art

The present invention concerns a battery cell for a battery which is capable of improving safety of the battery. The invention further concerns a battery which is highly prevented from undesired hazardous behavior in case of battery cell failure or battery abuse.

Recent growth of electronic industry has intensified the demand for high performance, compact and portable electronic devices. Such electronic devices require batteries with high energy density. Particularly suitable for this purpose are nickel-rich and lithium-rich positive active materials. However, such nickel-rich and lithium-rich positive active materials bear problems in case of battery cell failure or battery cell abuse. As a consequence, the battery may show undesired hazardous behavior, such as degassing, development of fire and explosion.

### Disclosure of the invention

The inventive battery cell according to present claim 1, however, reduces the hazardous level and contributes to safety of a battery. The inventive battery cell comprises two battery cell terminals which are contactable from outside of the battery cell and an electrochemical part which is preferably constructed in the form of at least one jelly roll comprising at least one positive electrode, at least one negative electrode, an electrolyte comprising at least one conductive salt and at least one solvent, and at least one separator. The at least one separator is constituted such that it becomes at least partially impermeable for ions which can be generated inside of the electrochemical part, when the at least one separator reaches a predefined temperature. To increase the safety of the inventive battery cell, the battery cell includes a fast discharge unit having at least one resistor.

The fast discharge unit is connectable between the two battery cell terminals and configured to discharge the battery by means of a first current flowing through the battery and the fast discharge unit. More particular, a first resistance value of the at least one resistor is selected in such a way, that the first current causes during a through flowing of the battery and the fast discharge unit such a heating of the electrochemical part, that the at least one separator reaches the predefined temperature. In other words, within a few milliseconds (ms) after activation of the fast discharge unit the charge carriers in front of the electrodes are discharged very fast. This leads to a depletion of charge carriers in front of the electrodes and causes a first strong polarization of the electrodes. Within the next few hundred milliseconds, in a second step, the charge carriers already existing in the electrolyte will be very fast discharged in comparison to the slower deinsertion/insertion reaction of the electrodes, to the slow diffusion through the solid electrolyte interphase (SEI) and to the slow diffusion in the active material. This causes a strong separation of charge carriers in front of the electrode which causes a further increase of electrode polarization and a high voltage drop of the battery cell and a first plateau phase is reached. The faster the discharge, the higher is the safety behavior of the battery cell, because the discharge current rapidly decreases and the warming of the battery cell is not locally fixed at a damage zone. Therefore, the total warming of the battery cell is low compared to the local warming in case of a short circuit.

The voltage drop can be improved by the following mechanisms: according to a first mechanism, the voltage drop can be improved by modifying the electrolyte of the battery cell such that the solvent comprises at least one cyclic carbonate and at least one linear carbonate and a ratio in vol.-% of the cyclic carbonate to the linear carbonate ranges from 60 : 40 to 95 : 5. Thereby the ion conductivity of the electrolyte is reduced. This is due to the high content of cyclic carbonates. In the electrolyte, one cyclic carbonate or a mixture of cyclic carbonates can be used, their total volume ranging between 60 and 95 vol.-% relative to the sum of the volumes of the linear and cyclic carbonates. Furthermore, the electrolyte may contain one linear carbonate or a mixture of linear carbonates, their total volume ranging between 5 and 40 vol.-% relative to the sum of the volumes of the linear and cyclic carbonates.

Alternatively, according to a second mechanism, the voltage drop can be improved by reducing the ion conductivity of the electrolyte by using a solvent which comprises at least one cyclic carbonate and at least one linear carbonate, wherein a ratio in vol.-% of the cyclic carbonate to the linear carbonate ranges from 10 : 90 to 5 : 95. Due to the high content of linear carbonates only a small amount of ions gets dissolved in the solvent and the ion conductivity in the electrolyte is reduced. As already outlined for the first mechanism, also in the second mechanism, the solvent may contain one or more linear carbonates and one or more cyclic carbonates, the total volume of the cyclic carbonates ranging between 5 and 10 vol.-% and the total volume of the linear carbonates ranging between 90 and 95 vol.-% relative to the sum of the volumes of the linear and cyclic carbonates.

As an third and thus, alternative mechanism to both mechanisms described above or as an additive mechanism, the voltage drop can be improved by directly reducing the charge carriers, i.e. by adjusting the concentration of the conductive salt to be less than 1 mol/L and particularly 0.8 mol/L of the electrolyte. By reducing the concentration of the conductive salt the amount of charge carriers is highly reduced.

The reduction of the ion conductivity of the electrolyte has a further advantageous effect on the safety of the battery cell: after reaching the first plateau phase, where most of the charge carriers in the electrolyte are separated and a depletion takes place at the electrodes, a second plateau phase is reached at a time line of 500 ms to 25 s which forms by deinsertion of charge carriers from the negative electrode and diffusion through the electrolyte to the positive electrode, where the charge carriers get inserted into the positive electrode. The speed of the diffusion can be influenced by one of the above captioned mechanisms, i.e. a ratio in vol.-% of the cyclic carbonate to the linear carbonate ranging from 60 : 40 to 95 : 5 or a ratio in vol.-% of the cyclic carbonate to the linear carbonate ranges from 10 : 90 to 5 : 95. The concentration of the conductive salt of less than 1 mol/L of the electrolyte directly influences the amount of charge carries in the electrolyte.

Furthermore, by modifying the composition of the electrolyte, to include at least one cyclic carbonate and at least one linear carbonate, wherein a ratio in vol.-% of the cyclic carbonate to the linear carbonate ranges from 60 : 40 to 95 : 5, the intrinsic safety of a battery cell can be improved. Since the cyclic carbonates usually have a high boiling point over about 180 °C, the high content of the cyclic carbonate in the electrolyte provides for a low pressure increase during cell failure. In particular, in case of fast discharge of the battery cell, a low gas pressure could be maintained until shut down of the separator of the battery. Accordingly, the higher the content of the cyclic carbonate, the probability of low hazardous level of the battery increases.

Even in case the inventive battery cell is used in combination with hazardous electrode materials which usually have an unstable crystal structure and decreased trigger temperature for thermal runaway of a battery cell, hazardous behavior of a battery such as degassing, fire development or explosion can be prevented. By use of the inventive battery cell, safety of a battery in case of cell failure such as cell-internal short circuit, overheating and the like as well as in case of cell damage due to mishandling or misuse of the cell like heavy shock, battery drop, mechanical damage and the like, can be increased.

The dependent claims contain advantageous embodiments of the present invention.

According to an embodiment of the present invention the first resistance value is preferably further selected in such a way, that the heating of the electrochemical part caused by the first current during the through flowing of the battery and the fast discharge unit can't trigger a thermal runaway of the battery. Thereby safety of the battery cell is further improved.

In the inventive cell battery, it is preferable that the ratio in vol.-% of the cyclic carbonate to the linear carbonate ranges from 70 : 30 to 80 : 20. Although a higher content of the cyclic carbonate is preferable in light of the safety improvement of a battery and a higher content of the linear carbonate might increase the conductivity of the electrolyte, the above ratio of cyclic to linear carbonates provides freedom in the choice of the respective carbonates and suitable mixtures of cyclic and linear carbonates improving the safety of a battery on the one hand and contributing to high battery performance on the other hand can be prepared easily.

In case of the third mechanism, i.e. a reduced concentration of the conductive salt, the solvent is not particularly limited but may preferably be selected from the group consisting of: ethyl acetate, methyl propionate, ethyl propionate, methyl butyrate, ethyl butyrate, propyl butyrate, butyl butyrate, methyl formate, ethyl formate, methyl difluoroacetate, dimethoxymethane, dimethoxyethane, diethoxyethane, tetrahydrofurane, 2-methyl tetrahydrofurane, 2,2,2-trifluoroethyl-N,N-dimethyl carbamate, hexafluoro-i-propyl-N,N-dimethyl carbamate, tetramethylene sulfone, methyl-i-propyl sulfone, methyl-i-propyl sulfone, ethylmethyl sulfone, ethyl-i-propyl sulfone, ethyl-i-propyl sulfone, butyl sulfone, ethyl-i-butyl sulfone, ethyl-i-butyl sulfone, 1-fluoro-2-(methylsulfonyl)benzene, i-propyl-i-butyl sulfone, 1-fluoro-2-(methylsulfonyl)benzene, i-propyl-s-butyl sulfone, ethyl vinyl sulfone, butyl-i-butyl sulfone, acetonitrile, 3-methoxypropionitrile, 3-ethoxypropionitrile, (2,2,2-trifluoro)ethoxypropionitrile, malonitrile, succinonitrile, glutaronitrile, adiponitrile, pimelonitrile, suberonitrile, azelanitrile, sebaconitrile, dimethyl methylphosphonate, dimethyl(2-methoxyethoxy)methylphosphonate, diethyl(2-methoxyethoxy)methylphosphonate, substituted phosphazenes, silanes, siloxanes, 2-trifluoromethyl-3-methoxyperfluoropentane, 2-(Trifluoro-2-fluoro-3-difluoroproxy)-3-difluoro-4-fluoro-5-trifluoropentane, ethyl propyl ether, 1,1-difluoro-2,2-difluoroethy-2',2'-difluoro-3',3'-difluoropropyl ether, 1,3-dioxolane, 4-methyl-1,3-dioxolane, 2-methyl-1,3-dioxolane, gamma butyrolactone, halogenated gamma butyrolactone, N,N-dimethyltrifluoroacetamide and methyl chloroformate. Arbitrary mixtures of these solvents are also possible.

According to an embodiment of the present invention, the linear carbonate is preferably selected from the group consisting of: butyl carbonate, methyl-2,2,2-trifluoroethyl carbonate, ethyl-2,2,2-trifluoroethyl carbonate, propyl-2,2,2-trifluoroethyl carbonate, methyl-2,2,2,2',2',2'-hexafluoro-i-propyl carbonate, ethyl-2,2,2,2',2',2'-hexafluoro-i-propyl carbonate, di-2,2,2-trifluoroethyl carbonate, bis-(2,2,3,3-pentafluoro-propyl) carbonate, bis-(2,2,3,3-tetrafluoro-propyl) carbonate. Arbitrary mixtures of these linear carbonates are also suitable. These linear carbonates are available at moderate prices and even small amounts can sufficiently reduce the viscosity of the electrolyte so that high amounts of cyclic carbonates are possible.

In light of a safety increase of a battery particularly preferred among the above linear carbonates is EMC or DMC or a combination of EMC and DMC. These linear carbonates particularly contribute to safety of a battery. DMC did not increase the short circuit resistance of the damage zone. EMC in comparison to DMC is better but linear carbonates are always worse in comparison to cycling carbonates for the stabilization of the negative electrode.

According to another embodiment, the cyclic carbonate is preferably at least one selected from the group consisting of: ethylene carbonate (EC), fluoroethylene carbonate (FEC), propylene carbonate (PC), fluoropropylene carbonate, 4-(2,2,3,3-tetrafluoropropoxymethyl)-[1,3]-dioxolan-2-one, 4-(2,2,3,3-tetrafluoro-2-trifluoromethyl-propyl)-[1,3]-dioxolan-2-one, chloroethylene carbonate, trifluoropropylene carbonate, trifluoromethyl propylene carbonate. Mixtures of these cyclic carbonates are also suitable. The defined cyclic carbonates improve the intrinsic safety of a battery due to their high boiling point of at least 200 °C. Therefore, the pressure increase during cell failure is low and development of gas pressure is reduced.

Particularly, EC and FEC are known to stabilize the surface film on a negative electrode. Therefore, the short circuit resistance during cell failure is increased. Furthermore, EC, FEC and PC reduce the conductivity of the electrolyte, whereby the polarization of the electrodes increases. Such effect might be beneficial during fast discharge of a jelly roll battery. Here, the voltage during fast discharge could be reduced.

The use of FEC and FPC might increase the oxidation stability of the electrolyte. Therefore, the electrolyte reactions during cell failure at the positive electrode of a battery, which are exothermic reactions, could be reduced and shifted to higher temperatures.

According to another embodiment, the conductive salt is preferably selected from the group consisting of: LiClO₄, LiBF₄, LiPF₆, LiAsF₆, LiCl, LiBr etc. and such organic lithium salts as Li(C₆H₅), LiN(SO₂CF₃)₂, LiC(SO₂CF₃)₃, LiOSO₂CF₃, LiOSO₂C₂F₅, LiOSO₂C₃F₇, LiOSO₂C₄F₉, LiOSO₂C₅F₁₁, LiOSO₂C₆F₁₃, LiOSO₂C₇F₁₅, tris(pentafluorophenyl)borate, pentafluorophenyl-bis (hexafluoro-iso-propanol) borane, [2-(2,4-difluorophenyl)-4-fluoro-] 1,3,2- benzodioxaborole, phenyl- (1,2-ethylene glycol) borane; triethyl borate, tris [1,2-benzenediolato (2-)-O,O'] phosphate, tris [3-fluoro 1,2-benzenediolato (2-)- O,O'] phosphate, tris (oxalato)phosphate, tetrafluorooxalatophosphate, perfluoroethyl trifluoroborate, (malonatooxalato)borate, bis(polyfluorodiolate)borate, difluoro (oxalato)borate, tetracyanoborate, dilithiumdodecafluoro dodecaborate, bis(butanesulfonyl)imide,cyanamide; oligomeric fluorosulfonyl imides, lithium bis (fluorosulfonyl) imide, lithium (fluorosulfonyl) (nonafluorobutanesulfonyl) imide, lithium bis (trifluoroborane) imidazolide, lithium 1,2,3-triazole-4,5-dicarbonitrile, lithium tetra (1,1,1,3,3,3-hexafluoro-iso-propyl) aluminate, lithium tetra (1,1,1,3,3,3-hexafluoro-2-butyl) aluminate, lithium tetra (1,1,1,3,3,3-hexafluoro-2-propylphenyl) aluminate and lithium tetra (perfluorobutyl) aluminate. These lithium salts show high conductivity. Even when used at low concentrations, their conductivity is sufficient to provide excellent battery performance. Among these lithium salts, LiPF₆ is preferred since it has excellent ion-conductivity and is available at a moderate price.

Further preferable is the use of a mixture of cyclic and linear carbonate(s), wherein the total content of the cyclic carbonate and the linear carbonate is at least 80 vol.-% in relation to the total volume of the electrolyte. Such high amount of carbonates guarantees for high safety of a battery in case of cell failure or cell damage of the battery cells.

The present invention further concerns a battery, comprising at least one of the battery cells described above. The battery is not particularly limited and may include primary batteries or secondary batteries including either single cells, such as e.g. jelly roll cells, or stacked cells. Also combinations of multiple cells within one compartment are possible. Preferably, the inventive battery is a lithium-ion-battery. The inventive battery makes use of the inventive battery cell and is therefore highly prevented from critical safety behavior in case of cell failure such as cell-internal short circuit, overheating and the like, or cell damage due to misuse or mishandling. In other words, the hazardous level of the inventive battery is low and acceptance of such battery on the market will be high.

### Brief description of the drawings

In the following section embodiments of the present invention are disclosed with reference to the enclosed figures. Herein:
- Figure 1: is a diagram illustrating the fast discharge behavior of a battery cell and
- Figur 2: is a diagram illustrating the fast discharge behavior of a battery cell with improved electrolyte according to a first embodiment.

### Embodiments of the present invention

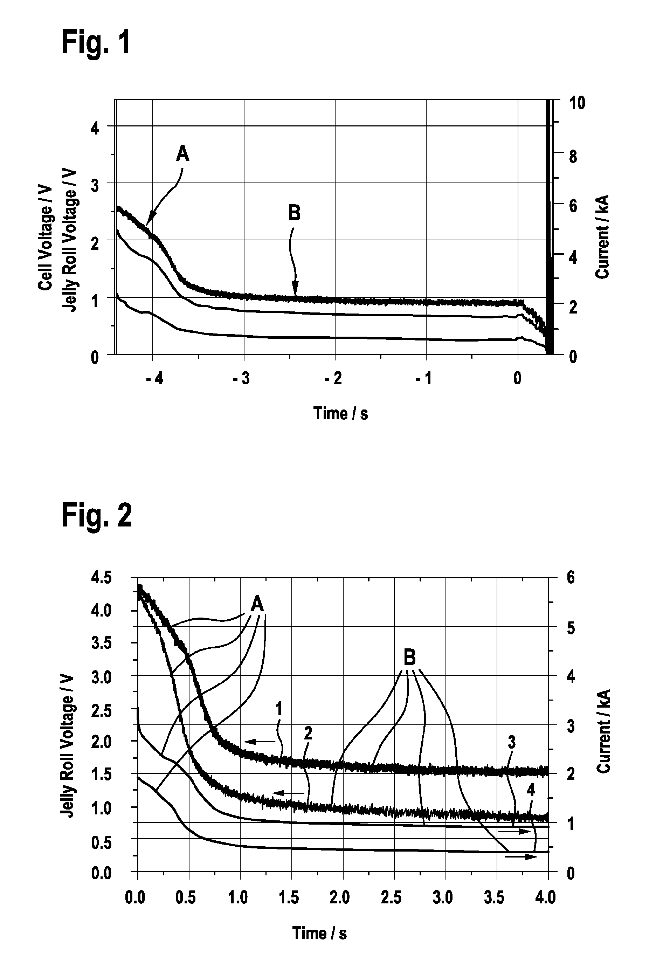

Figure 1 is a diagram illustrating the fast discharge of a battery cell, wherein the battery cell is a lithium ion battery cell which comprises two battery cell terminals which are contactable from outside of the battery cell and which further comprises an electrochemical part which is exemplarily constructed in the form of at least one jelly roll. The electrochemical part includes at least one positive electrode and at least one negative electrode, an electrolyte, and at least one separator, wherein the at least one separator becomes at least partially impermeable for ions which can be generated inside of the electrochemical part, when the at least one separator reaches a predefined temperature. The battery cell further comprises a fast discharge unit having at least one resistor, wherein the fast discharge unit is connectable between the two battery cell terminals and configured to discharge the battery by means of a first current flowing through the battery and the fast discharge unit, wherein a first resistance value of the at least one resistor is selected in such a way, that the first current causes during a through flowing of the battery and the fast discharge unit such a heating of the electrochemical part, that the at least one separator reaches the predefined temperature.

The positive electrode was composed of:
LiNi_{0,8}Co_{0,15}Al_{0,05}O₂ (NCA) as an active material, about 3% by weight of binder, relative to the total weight of the active materials, about 3% by weight of carbon black, relative to the total weight of the active materials as an electrically conductive material;
area occupation: about 20 mg/cm²

The negative electrode was composed of:
Graphite as an active material, about 3% by weight of binder, relative to the total weight of the active material;
area occupation: about 20 mg/cm²

The separator had an average thickness of about 20 µm including a ceramic coating. Active material: graphite; binder: about 3 % by weight calculated based on active material; weight per area about 15mg/cm²; thickness: around 20 µm with ceramic coating.

In the example of Figure 1 the electrolyte comprises at least one conductive salt and a solvent which is a mixture of cyclic and linear carbonates: ethylene carbonate 25 vol.-%, dimethyl carbonate: 20 vol.-% and ethyl methyl carbonate: 55 vol.-%. The conductive salt is LiPF₆ at a concentration of 1.2 mol/l electrolyte. Due to the composition of the electrolyte, the battery cell is not included by the scope of the present invention but serves for illustrating the fast discharge mechanism.

In the diagram of Figure 1, the cell voltage in Volt is presented depending on the time in seconds. Three curves are shown (upper curve: current flowing through the Fast Discharge Device (FDD); middle curve: measured full cell voltage; lower curve: jelly roll voltage calculated based on cell resistance). When activating the fast discharge unit, after about 500 ms a first plateau A is reached which is mainly caused by lithium-ion diffusion plus deintercalation/intercalation of lithium-ions from and into the electrodes. The diffusion of the lithium-ions strongly depends on the chemical nature of the electrolyte. After approximately 500 ms the first lithium-ion arrives in front of the positive electrode which leads to a constant fast discharge current, because this step shows a rate limitation (second plateau B). The maximum discharge current during the plateau phases A and B is relatively high which offers improvements of the safety behavior of the battery cell by modifying the electrolyte according to the present invention.

At about 4.5 s a nail penetration test has been carried out according to Sandia/USABC/VDA Lithium metal and lithium ion batteries. A SUS nail is penetrated into the battery cell which causes a damage zone. As shown in figure 1, the current suddenly increases strongly which is due to cell explosion The reason for the cell explosion is that heating due to failure current around the nail triggered exothermic reactions of the cell's chemistry. The resulting hazard level of the battery cell was 7 (very high).

Figure 2 illustrates the effects of the improvements in the electrolyte. The electrolyte was composed of 10 vol.-% fluoroethylene carbonate, 40 vol.-% diethylene carbonate and 50 vol.-% ethylene carbonate, i.e. 60 vol.-5 cyclic carbonates and 40 vol.-5 linear carbonates. As a conductive salt LiPF₆ at a concentration of 0.8 mol/l was used. The electrolyte additionally contained 4 wt.-% propensulton (additive), relative to the total weight of the electrolyte.

Figure 2 shows four curves in which the curve 1 (current flowing through the FDD) shows the results of the non inventive electrolyte. Due to the high amount of conductive salt and no modification in electrolyte solvents the voltage plateau one and two is very high (see 3^{rd} curve). Curve 2 shows the effect of the reduced concentration of the conductive salt (reduction from 1.2 mol/l to 0.8 mol/l) and the modification of the electrolyte solvents. In particular, the overall conductivity of the electrolyte is reduced, therefore, higher voltage drop (4^{th} curve) at the very beginning and shorter and lower voltage plateau phase A between 0 and 500 ms and also lower voltage plateau phase B after 500 ms are obtained with reduced width of the maximum current peak.

In summary, the low conductive electrolyte containing high amounts (at least 60 vol.-% cyclic carbonates) of cyclic carbonates and lower Li⁺ conductivity slows down the Li⁺ diffusion which increases the polarization of the electrodes. Thereby the voltage drop especially at the very beginning of the fast discharge is higher.

The low concentration of conductive salt (less than 1.0 mol/l electrolyte) produces less available Li⁺ ions which leads to a reduction of the voltage/current plateau (A and B).

A lower surface area results in a lower deintercalation speed of the lithium ions from the electrode. Therefore, the lithium ion concentration in the electrolyte during the fast discharge can be reduced. Obtained is a reduction of the voltage/current plateau phase B after 500 ms.

## Claims

1. Battery cell comprising two battery cell terminals which are contactable from outside of the battery cell and an electrochemical part which is preferably constructed in the form of at least one jelly roll and comprising at least one positive electrode and at least one negative electrode, an electrolyte comprising at least one conductive salt and at least one solvent, and at least one separator, wherein the at least one separator becomes at least partially impermeable for ions which can be generated inside of the electrochemical part, when the at least one separator reaches a predefined temperature, **characterized by** a fast discharge unit having at least one resistor, wherein the fast discharge unit is connectable between the two battery cell terminals and configured to discharge the battery by means of a first current flowing through the battery and the fast discharge unit, wherein a first resistance value of the at least one resistor is selected in such a way, that the first current causes during a through flowing of the battery and the fast discharge unit such a heating of the electrochemical part, that the at least one separator reaches the predefined temperature, and wherein
- the solvent comprises at least one cyclic carbonate and at least one linear carbonate and a ratio in vol.-% of the cyclic carbonate to the linear carbonate ranges from 60 : 40 to 95 : 5 or wherein
- the solvent comprises at least one cyclic carbonate and at least one linear carbonate and a ratio in vol.-% of the cyclic carbonate to the linear carbonate ranges from 10 : 90 to 5 : 95 and/or wherein
- the concentration of the conductive salt is less than 1 mol/L and particularly 0.8 mol/L of the electrolyte.

2. Battery cell according to claim 1, **characterized in that** the first resistance value is further selected in such a way, that the heating of the electrochemical part caused by the first current during the through flowing of the battery and the fast discharge unit can't trigger a thermal runaway of the battery.

3. Battery cell according to claim 1 or 2, wherein the ratio in vol.-% of the cyclic carbonate to the linear carbonate ranges from 70 : 30 to 80 : 20.

4. Battery cell according to any of the preceding claims, wherein the solvent is selected from the group consisting of: ethyl acetate, methylpropionate, ethyl propionate, methyl butyrate, ethyl butyrate, propyl butyrate, butyl butyrate, methyl formate, ethyl formate, methyl difluoroacetate, dimethoxymethane, dimethoxyethane, diethoxyethane, tetrahydrofurane, 2-methyl tetrahydrofurane, 2,2,2-trifluoroethyl-N,N-dimethyl carbamate, hexafluoro-i-propyl-N,N-dimethyl carbamate, tetramethylene sulfone, methyl-i-propyl sulfone, methyl-i-propyl sulfone, ethylmethyl sulfone, ethyl-i-propyl sulfone, ethyl-i-propyl sulfone, butyl sulfone, ethyl-i-butyl sulfone, ethyl-i-butyl sulfone, 1-fluoro-2-(methylsulfonyl)benzene, i-propyl-i-butyl sulfone, 1-fluoro-2-(methylsulfonyl)benzene, i-propyl-s-butyl sulfone, ethyl vinyl sulfone, butyl-i-butyl sulfone, acetonitrile, 3-methoxypropionitrile, 3-ethoxypropionitrile, (2,2,2-trifluoro)ethoxypropionotrile, malonitrile, succinonitrile, glutaronitrile, adiponitrile, pimelonitrile, suberonitrile, azelanitrile, sebaconitrile, dimethyl methylphosphonate, dimethyl(2-methoxyethoxy)methylphosphonate, diethyl(2-methoxyethoxy)Methylphosphonate, substituted phosphazenes, silanes, siloxanes, 2-trifluoromethyl-3-methoxyperfluoropentane, 2-(Trifluoro-2-fluoro-3-difluoroproxy)-3-difluoro-4-fluoro-5-trifluoropentane, ethyl propyl ether, 1,1-difluoro-2,2-difluoroethy-2',2'-difluoro-3',3'-difluoropropyl ether, 1,3-dioxolane, 4-methyl-1,3-dioxolane, 2-methyl-1,3-dioxolane, gamma butyrolactone, halogenated gamma butyrolactone, N,N.dimethyltrifluoroacetamide and methyl chloroformate.

5. Battery cell according to any of the preceding claims, wherein the linear carbonate is at least one selected from the group consisting of: dimethyl carbonate, ethyl methyl carbonate, diethyl carbonate, methyl propyl carbonate and methyl butyl carbonate, methyl-2,2,2-trifluoroethyl carbonate, ethyl-2,2,2-trifluoroethyl carbonate, propyl-2,2,2-trifluoroethyl carbonate, methyl-2,2,2,2',2',2'-hexafluoro-i-propyl carbonate, ethyl-2,2,2,2',2',2'-hexafluoro-i-propyl carbonate, di-2,2,2-trifluoroethyl carbonate, bis-(2,2,3,3-pentafluoro-propyl) carbonate and bis-(2,2,3,3-tetrafluoro-propyl) carbonate.

6. Battery cell according to any of the preceding claims, wherein the linear carbonate is dimethyl carbonate or diethyl carbonate or a mixture of these two carbonates.

7. Battery cell according to any of the preceding claims, wherein the cyclic carbonate is at least one selected from the group consisting of: ethylene carbonate, fluoroethylene carbonate, propylene carbonate and fluoropropylene carbonate, 4-(2,2,3,3-tetrafluoropropoxymethyl)-[1,3]-dioxolan-2-one, 4-(2,2,3,3-tetrafluoro-2-trifluoromethyl-propyl)-[1,3]-dioxolan-2-one, chloroethylene carbonate, trifluoropropylene carbonate and trifluoromethyl propylene carbonate.

8. Battery cell according to any of the preceding claims, wherein the conductive salt is selected from the group consisting of: LiClO₄, LiBF₄, LiPF₆, LiAsF₆, LiCl, LiBr etc. and such organic lithium salts as Li(C₆H₅), LiN(SO₂CF₃)₂, LiC(SO₂CF₃)₃, LiOSO₂CF₃, LiOSO₂C₂F₅, LiOSO₂C₃F₇, LiOSO₂C₄F₉, LiOSO₂C₅F₁₁, LiOSO₂C₆F₁₃, LiOSO₂C₇F₁₅, tris(pentafluorophenyl)borate, pentafluorophenyl-bis (hexafluoro-iso-propanol) borane, [2-(2,4-difluorophenyl)-4-fluoro-] 1,3,2-benzodioxaborole, phenyl- (1,2-ethylene glycol) borane; triethyl borate, tris [1,2-benzenediolato (2-)- O,O'] phosphate, tris [3-fluoro 1,2-benzenediolato (2-)- O,O'] phosphate, tris (oxalato)phosphate, tetrafluorooxalatophosphate, perfluoroethyl trifluoroborate, (malonatooxalato)borate, bis(polyfluorodiolate)borate, difluoro (oxalato)borate, tetracyanoborate, dilithiumdodecafluoro dodecaborate, bis(butanesulfonyl)imide,cyanamide; oligomeric fluorosulfonyl imides, lithium bis (fluorosulfonyl) imide, lithium (fluorosulfonyl) (nonafluorobutanesulfonyl) imide, lithium bis (trifluoroborane) imidazolide, lithium 1,2,3-triazole-4,5-dicarbonitrile, lithium tetra (1,1,1,3,3,3-hexafluoro-iso-propyl) aluminate, lithium tetra (1,1,1,3,3,3-hexafluoro-2-butyl) aluminate, lithium tetra (1,1,1,3,3,3-hexafluoro-2-propylphenyl) aluminate and lithium tetra (perfluorobutyl) aluminate.

9. Battery cell according to any of the preceding claims, wherein the total content of the cyclic carbonate and the linear carbonate is at least 80 vol.-% in relation to the total volume of the electrolyte.

10. Battery, in particular, lithium-ion-battery, comprising a battery cell according to any of claims 1 to 9.
